# EUROPÄISCHE PATENTANMELDUNG

(11) **EP 2 570 279 A1**
(43) Veröffentlichungstag der Anmeldung: **20.03.2013**
(21) Anmeldenummer: 11290407.3
(22) Anmeldetag: 13.09.2011
(51) Int. Cl.: B60H 1/00, B60H 1/22

(54) **Kraftfahrzeugklimaanlage**

(71) Anmelder: Behr France Rouffach SAS, 68250 Rouffach (FR)
(72) Erfinder: Klein, Henri, 68 400 Riedisheim (FR)
(74) Vertreter: Grauel, Andreas

(57) **Zusammenfassung**

Bei einer Kraftfahrzeugklimaanlage (1), umfassend ein Gehäuse (13), ein Gebläse (12), eine erste elektrische Heizeinrichtung (2) zum Erwärmen der dem Fahrzeuginnenraum zuzuführenden Luft, einen von Kühlflüssigkeit für einen Verbrennungsmotor durchströmbaren Wärmeübertrager (3) als zweite Heizeinrichtung (3) zum Erwärmen der dem Fahrzeuginnenraum zuzuführenden Luft, soll einerseits im reinen Elektrobetrieb die elektrische Heizeinrichtung (2) einen hohen Wirkungsgrad zum Erwärmen der dem Innenraum zuführenden Luft aufweisen und andererseits beim Aufladen der Batterie an einem externen Stromnetz auch der Verbrennungsmotor mit der elektrischen Heizeinrichtung (2) erwärmbar sein.
Diese Aufgabe wird dadurch gelöst, dass die erste Heizeinrichtung (2) in Strömungsrichtung der durch die Kraftfahrzeugklimaanlage (1) geleiteten Luft vor der zweiten Heizeinrichtung (3) angeordnet ist.

## Beschreibung

Die Erfindung betrifft eine Kraftfahrzeugklimaanlage gemäß dem Oberbegriff des Anspruches 1 und ein Verfahren zum Betreiben einer Kraftfahrzeugklimaanlage gemäß dem Oberbegriff des Anspruches 11.

Kraftfahrzeugklimaanlagen dienen dazu, die dem Innenraum eines Kraftfahrzeuges zuzuführende Luft zu erwärmen und/oder zu kühlen. In Kraftfahrzeugklimaanlagen werden Wärmeübertrager als elektrische Heizeinrichtungen eingesetzt, um die Luft zu erwärmen, welche dem Innenraum zugeführt wird. Die elektrische Heizeinrichtung umfasst elektrische Widerstandsheizelemente, insbesondere PTC-Elemente (PTC: Positive Temperature Coefficient), wenigstens zwei elektrische Leiter mittels denen elektrischer Strom durch das PTC-Element geleitet wird und Wärmeleitelemente, insbesondere Lamellen bzw. Wellrippen, mittels denen die Oberfläche zum Erwärmen der Luft vergrößert wird.

In zunehmenden Maße werden Kraftfahrzeuge hergestellt, welche über einen Hybridantrieb verfügen. Kraftfahrzeugklimaanlagen für diese Kraftfahrzeuge verfügen auch über einen Wärmeübertrager zum Erwärmen der Luft, der von Kühlflüssigkeit durchströmt wird. Die gesamte Heizleistung der Kraftfahrzeugklimaanlage muss während eines reinen Elektrobetriebes ohne Verbrennungsmotor von der elektrischen Heizeinrichtung bzw. den PTC-Elementen aufgebracht werden. Aus diesem Grund ist es erforderlich, die PTC-Elemente auch mit Hochspannung, z. B. im Bereich von 50 bis 300 Volt anstelle von Niederspannung mit 12 Volt, zu betreiben.

Derartige Kraftfahrzeuge mit Hybridantrieb bzw. Hybridkraftfahrzeuge, die ais sogenannte Plug-In-Kraftfahrzeuge ausgebildet sind, werden im Allgemeinen bei einem Stillstand des Kraftfahrzeuges, insbesondere nachts, aufgeladen. Hierfür verfügt das Kraftfahrzeug bzw. die Kraftfahrzeugklimaanlage über einer Vorrichtung zum Betreiben der Kraftfahrzeugklimaanlage mit elektrischer Energie aus einem externen Stromnetz, z. B. einen Stecker, und vorzugsweise auch einem entsprechenden Transformator und/oder einem Gleichrichter. Während des Stillstandes des Hybridkraftfahrzeuges werden die Batterien des Kraftfahrzeuges mit elektrischer Energie aus dem externen Stromnetz aufgeladen und es kann bei niederen Temperaturen, z. B. im Winter, erforderlich sein, nicht nur die Batterien aufzuladen, sondern mit elektrischer Energie aus dem externen Stromnetz auch den Innenraum des Kraftfahrzeuges vor Fahrtantritt zu erwärmen und vorzugsweise zusätzlich auch den Verbrennungsmotor vorzuwärmen. Als elektrische Heizeinrichtungen werden dabei wasserseitige elektrische Heizeinrichtungen und luftseitige elektrische Heizeinrichtungen eingesetzt. Bei den luftseitigen elektrischen Heizeinrichtungen ist die elektrische Heizeinrichtung innerhalb eines Luftkanales der Kraftfahrzeugklimaanlage angeordnet und dadurch kann mit der elektrischen Heizeinrichtung nicht nur während eines reinen Elektrobetriebes des Hybridkraftfahrzeuges der Fahrgastinnenraum erwärmt werden, sondern auch während eines Stillstandes des Hybridkraftfahrzeuges mit elektrischer Energie aus dem externen Stromnetz der Innenraum des Kraftfahrzeuges vor Fahrtantritt erwärmt werden. In einem zweiten System mit einer wasserseitigen Heizeinrichtung ist die elektrische Heizeinrichtung an einem Kühlmittelkreislauf für die Kühlflüssigkeit angeordnet. Bei dieser zweiten Variante kann somit nicht nur mittelbar durch das Aufheizen der Kühlflüssigkeit der Innenraum des Kraftfahrzeuges erwärmt werden, da die Kühlflüssigkeit auch einen Wärmeübertrager in der Kraftfahrzeugklimaanlage durchströmt und der Wärmeübertrager Wärme von der Kühlflüssigkeit an die durch die Kraftfahrzeugklimaanlage geleitete Luft abgegeben wird und dadurch auch mittelbar der innenraum des Kraftfahrzeuges erwärmt werden kann. Bei dieser wasserseitigen elektrischen Heizeinrichtung kann auch der der Verbrennungsmotor erwärmt werden, weil dieser von der Kühlflüssigkeit erwärmbar ist. Der Nachteil ist dabei jedoch, dass im reinen Elektrobetrieb des Hybridkraftfahrzeuges ein geringer Wirkungsgrad der ersten elektrischen Heizeinrichtung zum Erwärmen des Innenraumes vorliegt, weil von der elektrischen Heizeinrichtung zum Erwärmen des Innenraumes des Kraftfahrzeuges auch der gesamte Kühlkreislauf mit Kühlflüssigkeit für den Verbrennungsmotor zu erwärmen ist. Bei der luftseitigen elektrischen Heizeinrichtung kann in nachteiliger Weise keine Erwärmung des Verbrennungsmotors erfolgen.

Die Aufgabe der vorliegenden Erfindung besteht deshalb darin, eine Kraftfahrzeugklimaanlage und ein Verfahren zum Betreiben einer Kraftfahrzeugklimaanlage zur Verfügung zu stellen, bei der einerseits im reinen Elektrobetrieb die elektrische Heizeinrichtung einen hohen Wirkungsgrad zum Erwärmen der dem Innenraum zuführenden Luft aufweist und andererseits beim Aufladen der Batterie an einem externen Stromnetz auch der Verbrennungsmotor mit der elektrischen Heizeinrichtung erwärmbar ist.

Diese Aufgabe wird gelöst mit einer Kraftfahrzeugklimaanlage, umfassend ein Gehäuse, ein Gebläse, eine erste elektrische Heizeinrichtung zum Erwärmen der dem Fahrzeuginnenraum zuzuführenden Luft, einen von Kühlflüssigkeit für einen Verbrennungsmotor durchströmbaren Wärmeübertrager als zweite Heizeinrichtung zum Erwärmen der dem Fahrzeuginnenraum zuzuführenden Luft, wobei die erste Heizeinrichtung in Strömungsrichtung der durch die Kraftfahrzeugklimaanlage geleiteten Luft vor der zweiten Heizeinrichtung angeordnet ist. Die erste Heizeinrichtung als auch die zweite Heizeinrichtung sind luftseitige Heizeinrichtungen und innerhalb eines Luftkanales der Kraftfahrzeugklimaanlage angeordnet. Dabei ist die erste Heizeinrichtung in Strömungsrichtung der durch den Luftkanal geleiteten Luft vor der zweiten Heizeinrichtung angeordnet, so dass dadurch in vorteilhafter Weise mit mittels der ersten Heizeinrichtung auch die zweite Heizeinrichtung und damit auch ein Verbrennungsmotor des Kraftfahrzeuges erwärmbar ist.

Insbesondere ist mittels Luftkonvektion und/oder Wärmeleitung und/oder Wärmestrahlung Wärme von der ersten elektrischen Heizeinrichtung auf den Wärmeübertrager bzw. die Kühlflüssigkeit der zweiten Heizeinrichtung übertragbar.

In einer weiteren Ausgestaltung ist bei einem eingeschalteten Gebläse mittels Luftkonvektion der durch einen Luftkanal geleiteten Luft Wärme von der ersten elektrischen Heizeinrichtung auf den Wärmeübertrager bzw. die Kühlflüssigkeit der zweiten Heizeinrichtung übertragbar.

In einer ergänzenden Ausführungsform sind die erste elektrische Heizeinrichtung und die zweite Heizeinrichtung in dem gleichen Luftkanal angeordnet durch welchen die Luft für die erste und zweite Heizeinrichtung leitbar ist. Die erste und zweite Heizeinrichtung sind innerhalb des gleichen Luftkanales angeordnet, durch welchen die Luft zur Übertragung der Wärme mittels Konvektion von der ersten Heizeinrichtung zu der zweiten Heizeinrichtung geleitet wird.

Vorzugsweise umfasst ein Kühlmittelkreislauf für die Kühlflüssigkeit eine Umwälzpumpe für die Kühlflüssigkeit und bei einer Übertragung von Wärme von der ersten Heizeinrichtung auf die zweite Heizeinrichtung ist die Umwälzpumpe betreibbar, so dass mittels der von der ersten Heizeinrichtung auf die zweite Heizeinrichtung übertragenen Wärme der Verbrennungsmotor erwärmbar ist.

Zweckmäßig umfasst die Kraftfahrzeugklimaanlage ein Ventil zum Öffnen und/oder Schließen der durch die zweite Heizeinrichtung leitbaren Kühlflüssigkeit. Mittels des Ventiles kann somit eine Leitung für Kühlflüssigkeit zu der zweiten Heizeinrichtung geöffnet und geschlossen werden.

In einer Variante ist die Kraftfahrzeugklimaanlage mit wenigstens einer Vorrichtung zum Betreiben der Kraftfahrzeugklimaanlage mit elektrischer Energie aus einem externen Stromnetz, z. B. einen Stecker, versehen und mittels der wenigstens einen Vorrichtung ist die erste elektrische Heizeinrichtung mit elektrischer Energie aus dem externen Stromnetz während des Übertragens von Wärme von der ersten Heizeinrichtung auf die zweite Heizeinrichtung betreibbar. Zweckmäßig umfasst die wenigstens eine Vorrichtung zusätzlich einen Transformator und/oder einen Gleichrichter und/oder ein Stromkabel.

In einer weiteren Ausführungsform umfasst die Kraftfahrzeugklimaanlage einen Kältemittelverdampfer zum Kühlen einer einem Fahrzeuginnenraum zuzuführenden Luft.

Insbesondere umfasst die Kraftfahrzeugklimaanlage einen Luftfilter und/oder wenigstens eine Luftleiteinrichtung, insbesondere eine Luftklappe, und/oder wenigstens einen Luftkanal.

In einer weiteren Ausgestaltung ist die erste elektrische Heizeinrichtung eine elektrische Widerstandsheizeinrichtung, insbesondere eine PTC-Heizeinrichtung.

In einer ergänzenden Variante ist von der Kraftfahrzeugklimaanlage ein in dieser Schutzrechtsanmeldung beschriebenes Verfahren ausführbar.

Erfindungsgemäßes Verfahren zum Betreiben einer Kraftfahrzeugklimaanlage für ein Kraftfahrzeug, insbesondere einer in dieser Schutzrechtsanmeldung beschriebenen Kraftfahrzeugklimaanlage, mit den Schritten: Erwärmen der einem Fahrzeuginnenraum zugeführten Luft mit einer ersten elektrischen Heizeinrichtung mit elektrischer Energie aus einer Batterie während eines Elektrobetriebes des Kraftfahrzeuges, Erwärmen der dem Fahrzeuginnenraum zugeführten Luft mit einer zweiten Heizeinrichtung mit Wärme aus einem Verbrennungsmotor während eines Betriebes des Kraftfahrzeuges mit dem Verbrennungsmotor, Erwärmen der einem Fahrzeuginnenraum zugeführten Luft mit der ersten elektrischen Heizeinrichtung mit elektrischer Energie aus einem externen Stromnetz während eines Stillstandes des Kraftfahrzeuges, wobei die von der ersten elektrischen Heizeinrichtung erzeugte Wärme auf die zweite Heizeinrichtung übertragen wird und mit dieser auf die zweite Heizeinrichtung übertragenen Wärme der Verbrennungsmotor erwärmt wird.

Zweckmäßig wird während des Elektrobetriebes des Kraftfahrzeuges und des Erwärmens des Fahrzeuginnenraumes mit der ersten elektrischen Heizeinrichtung Luft mit einem Gebläse durch oder an der elektrischen Heizeinrichtung vorbeigeleitet, so dass die elektrische Heizeinrichtung eine luftseitige elektrische Heizeinrichtung ist.

In einer weiteren Variante wird die von der ersten elektrischen Heizeinrichtung erzeugte Wärme auf die zweite Heizeinrichtung mit Wärmeleitung und/oder Wärmestrahlung und/oder Konvention übertragen, insbesondere mit Konvektion von durch die Kraftfahrzeugklimaanlage mit einem Gebläse geleiteten Luft, so dass die Luft zuerst an der ersten elektrischen Heizeinrichtung erwärmt wird, anschließend die erwärmte Luft zu der zweiten Heizeinrichtung geleitet wird und die erwärmte zu der zweiten Heizeinrichtung geleitete Luft die Wärme an die zweite Heizeinrichtung überträgt.

In einer weiteren Ausgestaltung wird während des Übertragens der Wärme von der ersten Heizeinrichtung auf die zweite Heizeinrichtung beim Stillstand des Kraftfahrzeuges Kühlflüssigkeit durch die zweite Heizeinrichtung als Wärmeübertrager geleitet, insbesondere mit einer Umwälzpumpe für die Kühlflüssigkeit und vorzugsweise einem geöffneten Ventil für den Wärmeübertrager an einem Kühlkreislauf für die Kühlflüssigkeit.

Insbesondere wird während des Erwärmens der dem Fahrzeuginnenraum zugeführten Luft mit der ersten elektrischen Heizeinrichtung mit elektrischer Energie aus der Batterie während eines Elektrobetriebes des Kraftfahrzeuges keine Kühlflüssigkeit durch die zweite Heizeinrichtung geleitet.

In einer weiteren Ausgestaltung wird während des Erwärmens der einem Fahrzeuginnenraum zugeführten Luft mit der ersten elektrischen Heizeinrichtung mit elektrischer Energie aus dem externen Stromnetz während des Stillstandes des Kraftfahrzeuges die Batterie des Kraftfahrzeuges mit elektrischer Energie aus dem externen Stromnetz aufgeladen.

In einer weiteren Ausgestaltung ist die erste elektrische Heizeinrichtung eine elektrische Widerstandsheizeinrichtung, insbesondere PTC-Heizeinrichtung, und vorzugsweise mit Hochspannung, z. B. im Bereich von 50 bis 300 Volt betreibbar.

Zweckmäßig ist die erste elektrische Heizeinrichtung ein Kondensator eines Warmepumpensystems.

In einer weiteren Ausgestaltung umfasst die Kraftfahrzeugklimaanlage als elektrische Heizeinrichtung nur die eine elektrische Heizeinrichtung.

In einer weiteren Variante umfasst die Kraftfahrzeugklimaanlage und/oder der Kühlmittelkreislauf des Verbrennungsmotors keine elektrische Heizeinrichtung in dem Kühlmittelkreislauf zum unmittelbaren Erwärmen der Kühlflüssigkeit des Kühlmittelkreislaufes.

Im Nachfolgenden wird ein Ausführungsbeispiel der Erfindung unter Bezugnahme auf die beigefügten Zeichnungen näher beschrieben. Es zeigt:

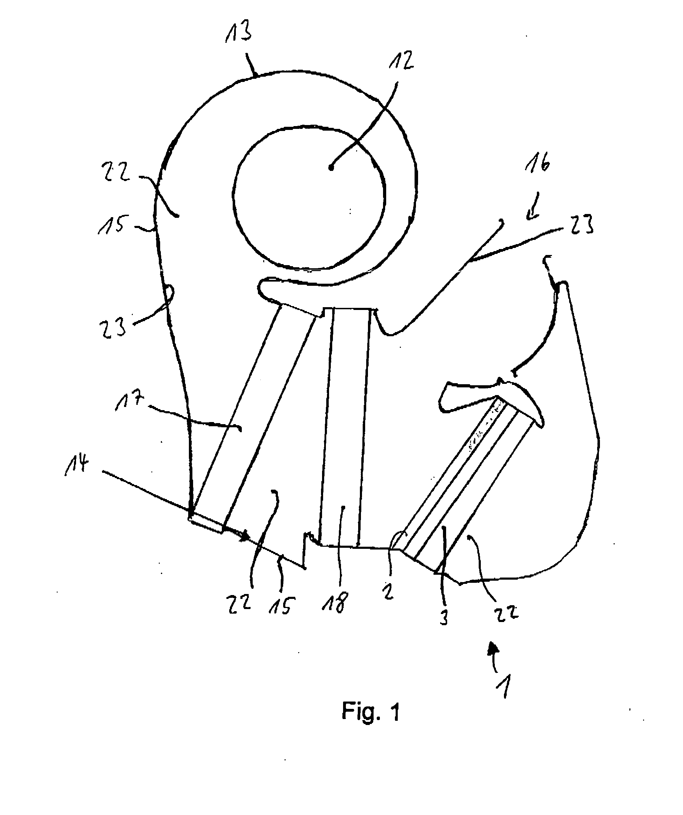

- Fig. 1: einen Querschnitt einer Kraftfahrzeugklimaanlage.

Fig. 1 zeigt eine Kraftfahrzeugklimaanlage 1. In einem ein- oder mehrteiligen Gehäuse 13 mit einer Bodenwandung 14 und einem Austrittsabschnitt 16 ist ein Gebläse 12, ein Luftfilter 17, ein Kältemittelverdampfer 18 eine erste elektrische Heizeinrichtung 2 und eine zweite Heizeinrichtung 3 angeordnet. Die erste Heizeinrichtung 2 ist eine elektrische Widerstandsheizeinrichtung, insbesondere PTC-Heizeinrichtung, und die zweite Heizeinrichtung 3 ist eine von Kühlflüssigkeit eines Verbrennungsmotors durchströmter Wärmeübertrager 3. Das Gehäuse 13 bildet somit einen Kanal 22 zum Durchleiten der Luft. Gehäusewandungen 15 des Gehäuses 13 weisen an der Innenseite eine Oberfläche 23 auf, welche den Kanal 22 begrenzen. Die Luft für den Innenraum eines Kraftfahrzeuges wird mittels des Gebläses 12 durch den Luftilter 17, den Kältemittelverdampfer 18, die erste elektrische Heizeinrichtung 2 und die zweite Heizeinrichtung 3 geleitet. Der Kältemittelverdampfer 18 dient zum Kühlen der durch die Kraftfshrzeugklimaanlage geleiteten Luft.

Die Kraftfahrzeugklimaanlage 1 wird in einem Kraftfahrzeug mit einem Hybridantrieb eingesetzt (nicht dargestellt), d. h. das Kraftfahrzeug verfügt über einen Elektromotor zum Antrieb des Kraftfahrzeuges mit elektrischer Energie aus Batterien und über einen Verbrennungsmotor zum Antrieb des Kraftfahrzeuges mit dem Verbrennungsmotor.

Die erste elektrische Heizeinrichtung 2 als luftseitige erste elektrische Heizeinrichtung 2 und die zweite Heizeinrichtung 3 als ein von Kühlflüssigkeit eines Kühlkreislaufes für den Verbrennungsmotor durchströmter Wärmeübertrager 3 sind innerhalb des gleichen Kanales 22 angeordnet. Beim Durchleiten von Luft durch die erste Heizeinrichtung 2 und durch die zweite Heizeinrichtung 3 strömt die Luft zuerst durch die erste elektrische Heizeinrichtung 2 und anschließend durch die zweite Heizeinrichtung 3. Die Luft wird dabei mittels des Gebläses 12 durch die erste und zweite Heizeinrichtung 2, 3 geleitet. Während eines reinen Elektrobetriebes des Kraftfahrzeuges, d. h. bei einer Fahrt mit dem Kraftfahrzeug mit einem abgeschalteten Verbrennungsmotor, wird keine Kühlflüssigkeit durch die zweite Heizeinrichtung 3 geleitet. Hierzu ist einerseits eine nicht dargestellte Umwälzpumpe für den Kühlmittelkreislauf abgeschaltet und zusätzlich weist der Kühlkreislauf ein nicht dargestelltes Ventil an der zweiten Heizeinrichtung 3 auf und dieses Ventil ist ebenfalls geschlossen, so dass ein Durchströmen von Kühlflüssigkeit durch die zweite Heizeinrichtung 3 ausgeschlossen ist. Dadurch kann auf effektive Weise mit einem hohen thermischen Wirkungsgrad mittels elektrischer Energie aus der Batterie des Kraftfahrzeuges mit der ersten elektrischen Heizeinrichtung 2 die durch die Kraftfahrzeugklimaanlage 1 geleitete Luft an der ersten elektrischen Heizeinrichtung 2 erwärmt werden.

Während eines Betriebes des Kraftfahrzeuges mit dem nicht dargestellten Verbrennungsmotor kann die Luft der dem Fahrzeuginnenraum zuzuführenden Luft mit der zweiten Heizeinrichtung 3 erwärmt werden. Hierzu ist im Allgemeinen die erste elektrische Heizeinrichtung 2 abgeschaltet und mittels der Abwärme des Verbrennungsmotores kann die durch die Kraftfahrzeugklimaanlage 1 mit dem Gebläse 12 geleitete Luft an der zweiten Heizeinrichtung 3 erwärmt werden. Sofern die Abwärme des Verbrennungsmotors nicht ausreicht, kann auch während des Betriebes des Kraftfahrzeuges mit dem Verbrennungsmotor zusätzlich, möglicherweise auch nur kurzzeitig, die erste elektrische Heizeinrichtung 2 eingeschaltet sein.

Die Batterien des Hybridkraftfahrzeuges werden währen des Stillstandes des Hybridkraftfahrzeuges, z. B. nachts, aufgeladen. Hierzu weist die Kraftfahrzeugklimaanlage eine Vorrichtung zum Betreiben der Kraftfahrzeugklimaanlage mit einem externen Stromnetz auf. Diese Vorrichtung umfasst einen Stecker, ein Stromkabel, einen Transformator und einen Gleichrichter. Mittels der Vorrichtung kann somit aus einem externen Stromnetz mit einer Wechselspannung von z. B. 220 Volt ein Gleichstrom erzeugt werden und mit einer Spannung von z. B. 300 Volt die ersten elektrischen Heizeinrichtung 2 betrieben werden und mit einer niedrigeren Spannung von z. B. 12 oder 30 Volt können die Batterien des Hybridkraftfahrzeuges aufgeladen werden. Auch das Gebläse 12 kann mit elektrischer Energie aus dem externen Stromnetz, z. B. eines Hauses, betrieben werden. Während des Aufladens der Batterie bzw. des Stillstandes des Hybridfahrzeuges kann es erforderlich sein, dass auch der Innenraum des Kraftfahrzeuges vorgewärmt wird. Beispielsweise vor einem Fahrteintritt während des Winters kann es erforderlich sein, den Innenraum vorzuwärmen, um bei einem anschließenden Elektrobetrieb elektrische Energie zum Erwärmen des Innenraumes mit elektrischer Energie aus den Batterien einzusparen und zusätzlich auch den Verbrennungsmotors des Kraftfahrzeuges zu erwärmen, um beispielsweise bei einem Betrieb des Kraftfahrzeuges mit dem Verbrennungsmotor diesen nicht mehr zu erwärmen müssen und dadurch bereits beim Start des Verbrennungsmotores einen höheren Wirkungsgrad des Verbrennungsmotors zu erreichen. Hierzu wird während des Stillstandes des Hybridkraftfahrzeuges mittels der elektrischen Heizeinrichtung 2 die von dem Gebläse 12 durch die Kraftfahrzeugklimaanlage 1 geleitete Luft erwärmt und anschießend dem Innenraum des Kraftfahrzeuges zugeführt. Sofern auch ein Erwärmen des Verbrennungsmotors erforderlich ist, wird die nicht dargestellte Pumpe des Kühlmittelkreislaufes eingeschaltet und das Ventil an der zweiten Heizeinrichtung 3 geöffnet, so dass die Kühlflüssigkeit des Verbrennungsmotors auch durch die zweite Heizeinrichtung 3 strömt. Da die Luft von dem Gebläse 12 zunächst durch die erste elektrische Heizeinrichtung 2 geleitet wird, anschließend an der ersten elektrischen Heizeinrichtung erwärmt und darauffolgend zu der zweiten Heizeinrichtung 3 als Wärmeübertrager strömt, erwärmt diese an der ersten elektrischen Heizeinrichtung 2 erwärmte Luft auch die zweite Heizeinrichtung 3. Dadurch wird mittels Konvektion von Luft die zweite Heizeinrichtung 3 erwärmt und aufgrund des Durchleitens von Kühlflüssigkeit durch den Verbrennungsmotor und durch die zweite Heizeinrichtung 3 kann auch die Kühlflüssigkeit und somit auch der Verbrennungsmotor erwärmt werden.

Insgesamt betrachtet sind mit der erfindungsgemäßen Kraftfahrzeugklimaanlage 1 wesentliche Vorteile verbunden. Während des reinen Elektrobetriebes des Kraftfahrzeuges kann mit der elektrischen Heizeinrichtung 2 mit einem hohen Wirkungsgrad der Innenraum des Kraftfahrzeuges erwärmt werden, weil keine Erwärmung während es reinen Elektrobetriebes des Kühlmittelkreislaufes für den Verbrennungsmotor erfolgt. Während des Stillstandes des Kraftfahrzeuges kann mit der ersten elektrischen Heizeinrichtung 2 entweder nur der Innenraum des Kraftfahrzeuges erwärmt werden oder bei Bedarf zusätzlich mittels der elektrischen Energie aus der ersten elektrischen Heizeinrichtung 2 auch der Verbrennungsmotor erwärmt werden. Dadurch ist an der Kraftfahrzeugklimaanlage 1 nur eine elektrische Heizeinrichtung 2 vorhanden und erforderlich, welche einerseits im Elektrobetrieb den Innenraum des Kraftfahrzeuges mit einem hohen thermischen Wirkungsgrad erwärmen kann und andererseits kann auch beim Stillstand des Hybridkraftfahrzeuges mit der ersten elektrischen Heizeinrichtung 2 der Kühlmittelkreislauf bzw. die Kühlflüssigkeit erwärmt und dadurch auch der Verbrennungsmotor erwärmt werden.

### Bezugszeichenliste

- 1: Kraftfahrzeugklimaanlage
- 2: Erste elektrische Heizeinrichtung
- 3: Zweite Heizeinrichtung
- 12: Gebläse
- 13: Gehäuse
- 14: Bodenwandung
- 15: Gehäusewandung
- 16: Austrittsabschnitt
- 17: Luftfilter
- 18: Kältemittelverdampfer
- 22: Kanal
- 23: Oberfläche

## Patentansprüche

1. Kraftfahrzeugklimaanlage (1), umfassend
- ein Gehäuse (13),
- ein Gebläse (12),
- eine erste elektrische Heizeinrichtung (2) zum Erwärmen der dem Fahrzeuginnenraum zuzuführenden Luft,
- einen von Kühlflüssigkeit für einen Verbrennungsmotor durchströmbaren Wärmeübertrager (3) als zweite Heizeinrichtung (3) zum Erwärmen der dem Fahrzeuginnenraum zuzuführenden Luft,
**dadurch gekennzeichnet, dass**
die erste Heizeinrichtung (2) in Strömungsrichtung der durch die Kraftfahrzeugklimaanlage geleiteten Luft vor der zweiten Heizeinrichtung (3) angeordnet ist.

2. Kraftfahrzeugklimaanlage nach Anspruch 1, **dadurch gekennzeichnet, dass** mittels Luftkonvektion und/oder Wärmeleitung und/oder Wärmestrahlung Wärme von der ersten elektrischen Heizeinrichtung (2) auf den Wärmeübertrager (3) bzw. die Kühlflüssigkeit der zweiten Heizeinrichtung (3) übertragbar ist.

3. Kraftfahrzeugklimaanlage nach Anspruch 1 oder 2, **dadurch gekennzeichnet, dass** bei einem eingeschalteten Gebläse (12) mittels Luftkonvektion der durch einen Luftkanal geleiteten Luft Wärme von der ersten elektrischen Heizeinrichtung (2) auf den Wärmeübertrager (3) bzw. die Kühlflüssigkeit der zweiten Heizeinrichtung (3) übertragbar ist.

4. Kraftfahrzeugklimaanlage nach einem oder mehreren der vorhergehenden Ansprüche, **dadurch gekennzeichnet, dass** der erste elektrische Heizeinrichtung (2) und die zweite Heizeinrichtung (3) in dem gleichen Luftkanal angeordnet sind durch welchen die Luft für die erste und zweite Heizeinrichtung (2, 3) leitbar ist.

5. Kraftfahrzeugklimaanlage nach einem oder mehreren der Ansprüche 2 bis 4, **dadurch gekennzeichnet, dass** ein Kühlmittelkreislauf für die Kühlflüssigkeit eine Umwälzpumpe für die Kühlflüssigkeit umfasst und bei einer Übertragung von Wärme von der ersten Heizeinrichtung (2) auf die zweite Heizeinrichtung (3) die Umwälzpumpe betreibbar ist, so dass mittels der von der ersten Heizeinrichtung (2) auf die zweite Heizeinrichtung (3) übertragenen Wärme der Verbrennungsmotor erwärmbar ist.

6. Kraftfahrzeugklimaanlage nach einem oder mehreren der Ansprüche 2 bis 5, **dadurch gekennzeichnet, dass** die Kraftfahrzeugklimaanlage (1) mit wenigstens einer Vorrichtung zum Betreiben der Kraftfahrzeugklimaanlage (1) mit elektrischer Energie aus einem externen Stromnetz, z. B. einen Stecker, versehen ist und mittels der wenigstens einen Vorrichtung die erste elektrische Heizeinrichtung (2) mit elektrischer Energie aus dem externen Stromnetz während des Übertragens von Wärme von der ersten Heizeinrichtung (2) auf die zweite Heizeinrichtung (3) betreibbar ist.

7. Kraftfahrzeugklimaanlage nach einem oder mehreren der vorhergehenden Ansprüche, **dadurch gekennzeichnet, dass** die Kraftfahrzeugklimaanlage (1) einen Kältemittelverdampfer (18) zum Kühlen einer einem Fahrzeuginnenraum zuzuführenden Luft umfasst.

8. Kraftfahrzeugklimaanlage nach einem oder mehreren der vorhergehenden Ansprüchen, **dadurch gekennzeichnet, dass** die Kraftfahrzeugklimaanlage (1) einen Luftfilter (17) und/oder wenigstens eine Luftleiteinrichtung, insbesondere eine Luftklappe, und/oder wenigstens einen Luftkanal (22) umfasst.

9. Kraftfahrzeugklimaanlage nach einem oder mehreren der vorhergehenden Ansprüchen, **dadurch gekennzeichnet, dass** die erste elektrische Heizeinrichtung (2) eine elektrische Widerstandsheizeinrichtung, insbesondere eine PTC-Heizeinrichtung, ist.

10. Kraftfahrzeugklimaanlage nach einem oder mehreren der vorhergehenden Ansprüchen, **dadurch gekennzeichnet, dass** ein Verfahren gemäß einem oder mehrerer der Ansprüche 10 bis 15 ausführbar ist.

11. Verfahren zum Betreiben einer Kraftfahrzeugklimaanlage (1) für ein Kraftfahrzeug, insbesondere einer Kraftfahrzeugklimaanlage (1) gemäß einem oder mehreren der vorhergehenden Ansprüche, mit den Schritten:
- Erwärmen der einem Fahrzeuginnenraum zugeführten Luft mit einer ersten elektrischen Heizeinrichtung (2) mit elektrischer Energie aus einer Batterie während eines Elektrobetriebes des Kraftfahrzeuges,
- Erwärmen der dem Fahrzeuginnenraum zugeführten Luft mit einer zweiten Heizeinrichtung (3) mit Wärme aus einem Verbrennungsmotor während eines Betriebes des Kraftfahrzeuges mit dem Verbrennungsmotor,
- Erwärmen der einem Fahrzeuginnenraum zugeführten Luft mit der ersten elektrischen Heizeinrichtung (2) mit elektrischer Energie aus einem externen Stromnetz während eines Stillstandes des Kraftfahrzeuges,
**dadurch gekennzeichnet, dass**
die von der ersten elektrischen Heizeinrichtung (2) erzeugte Wärme auf die zweite Heizeinrichtung (3) übertragen wird und mit dieser auf die zweite Heizeinrichtung (3) übertragenen Wärme der Verbrennungsmotor erwärmt wird.

12. Verfahren nach Anspruch 11, **dadurch gekennzeichnet, dass** die von der ersten elektrischen Heizeinrichtung (2) erzeugte Wärme auf die zweite Heizeinrichtung (3) mit Wärmeleitung und/oder Wärmestrahlung und/oder Konvention übertragen wird, insbesondere mit Konvektion von durch die Kraftfahrzeugklimaanlage mit einem Gebläse (12) geleiteten Luft, so dass die Luft zuerst an der ersten elektrischen Heizeinrichtung (2) erwärmt wird, anschließend die erwärmte Luft zu der zweiten Heizeinrichtung (3) geleitet wird und die erwärmte zu der zweiten Heizeinrichtung (3) geleitete Luft die Wärme an die zweite Heizeinrichtung (3) überträgt.

13. Verfahren nach Anspruch 11 oder 12, **dadurch gekennzeichnet, dass** während des Übertragens der Wärme von der ersten Heizeinrichtung (2) auf die zweite Heizeinrichtung (3) beim Stillstand des Kraftfahrzeuges Kühlflüssigkeit durch die zweite Heizeinrichtung (3) als Wärmeübertrager (3) geleitet wird, insbesondere mit einer Umwälzpumpe für die Kühlflüssigkeit und vorzugsweise einem geöffneten Ventil für den Wärmeübertrager (3) an einem Kühlkreislauf für die Kühlflüssigkeit.

14. Verfahren nach einem oder mehreren der Ansprüche 11 bis 13, **dadurch gekennzeichnet, dass** während des Erwärmen der dem Fahrzeuginnenraum zugeführten Luft mit der ersten elektrischen Heizeinrichtung (2) mit elektrischer Energie aus der Batterie während eines Elektrobetriebes des Kraftfahrzeuges keine Kühlflüssigkeit durch die zweite Heizeinrichtung (3) geleitet wird.

15. Verfahren nach einem oder mehreren der Ansprüche 11 bis 14, **dadurch gekennzeichnet, dass** während des Erwärmen der einem Fahrzeuginnenraum zugeführten Luft mit der ersten elektrischen Heizeinrichtung (2) mit elektrischer Energie aus dem externen Stromnetz während des Stillstandes des Kraftfahrzeuges die Batterie des Kraftfahrzeuges mit elektrischer Energie aus dem externen Stromnetz aufgeladen wird.
